# EUROPÄISCHE PATENTSCHRIFT

(11) **EP 2 168 532 B1**
(45) Veröffentlichungstag und Bekanntmachung des Hinweises auf die Patenterteilung: **13.08.2014**
(21) Anmeldenummer: 09002400.1
(22) Anmeldetag: 20.02.2009
(51) Int. Cl.: A61C 13/277

(54) **Zahnersatz und dessen Herstellung**
Dental replacement and production of same
Prothèse dentaire et sa fabrication

(30) Priorität: 30.09.2008 DE 202008012961 U
(43) Veröffentlichungstag der Anmeldung: 31.03.2010
(73) Patentinhaber: Usenko, Rainer, 72401 Haigerloch (DE); Hornig, Cornelius, 72336 Balingen (DE)
(72) Erfinder: Usenko, Rainer, 72401 Haigerloch (DE); Hornig, Cornelius, 72336 Balingen (DE)
(74) Vertreter: Klocke, Peter

(56) Entgegenhaltungen:
- DE-A1- 10 048 119
- DE-A1- 10 316 917
- DE-A1-102006 013 890
- DE-A1-102007 043 023

## Beschreibung

Die vorliegende Erfindung betrifft ein Verfahren zum Herstellen von abnehmbarem Zahnersatz, bei dem auf ein Primärteil ein abnehmbares Sekundärteil mit Kau- oder Beißfläche aufgebracht wird. In der zahnmedizinischen Prothetik ist ein herausnehmbarer Zahnersatz ein gängiges Mittel um fehlende Zähne zu ersetzen. Die Erfindung bezieht sich auf herausnehmbaren Zahnersatz, bei dem auf ein Primärteil ein herausnehmbares Sekundärteil aufgesetzt wird, welches über Friktionsflächen an dem Primärteil gehalten wird. Darunter werden insbesondere Teleskopkronen und sonstige parallel gefräste Flächen (Stege und Geschiebe) verstanden, die entweder als Teleskopprothese mit mehreren zusammengefügten Teleskopkronen oder als eine Brücke mit Teleskopkronen als Brückenpfeiler eingesetzt werden. Sowohl die Teleskopprothese als auch die Brücke wird durch die Teleskopkronen sicher gehalten und bieten einen hohen Tragekomfort. Die Herstellung einer oder mehrerer Teleskopkronen erfolgt im Zahnlabor mittels einer allgemein bekannten und seit langem praktizierten aufwändigen Technik, derart, dass zuerst die Primärteile auf einem Zahnstumpf modelliert und gegossen werden und anschließend die Sekundärteile nach Überabdruck durch den Zahnarzt in diversen Verfahrensschritten im Zahnlabor modelliert werden, wobei mittels eines Abdrucks der Zahnstumpf mit dem Sekundärteil dupliert und das Primärteil entsprechend hergestellt wird. Die Primärteile und Sekundärteile bestehen dabei in der Regel aus demselben Material, wobei es sich um Goldlegierungen oder edelmetallfreie Legierungen handeln kann. Es ist auch möglich, mittels Galvanotechnik das Sekundärteil auf Edelmetall, Nicht-Edelmetall und Zirkonprimären herzustellen. Das Sekundärteil besteht dann aus Galvanogold, wobei aber bei Zirkon- und Edelmetallteleskopen durch Aufbringen von Silberleitlack nur noch eine Adhäsion und keine Friktion mehr herstellbar ist. Hiermit lässt sich eine sehr genaue Passung herstellen.

Neuerdings kann die Herstellung des Primärteils auch dadurch erfolgen, dass die Daten des Zahnstumpfes elektronisch erfasst werden und mittels dieser Daten ein entsprechend angepasstes Primärteil gefräst wird.

Damit das Sekundärteil einerseits auf dem Primärteil hält, andererseits jedoch auch abnehmbar ist, muss bei der Herstellung der Friktionsflächen zwischen den beiden Teilen sehr sorgfältig gearbeitet werden. Hier besteht die Möglichkeit, mit parallelen Flächen oder Konusflächen zu arbeiten. Bei letzteren erfolgt die Halterung des Sekundärteils auf dem Primärteil im wesentlichen durch Verklemmung. Zum einen ist der Zeitaufwand bei der Herstellung eines herausnehmbaren Zahnersatzes erheblich und zum anderen kommt es im Laufe der Zeit zu einer nachlassenden Friktion, so dass aufwändige Nacharbeiten erforderlich sind.

DE 10048119 A offenbart ein Verfahren zum Herstellen von abnehmbarem Zahnersatz nach der ersten Teil vom Anspruch 1 entsprechend dem Oberbegriff des Anspruchs 1.

DE 102007043023 A1 offenbart ein Kunstsofffriktionsteil, das durch ein Tiefziehverfahren hergestellt wird.

Der vorliegenden Erfindung liegt daher die Aufgabe zugrunde, eine Möglichkeit vorzuschlagen, die die Herstellung eines herausnehmbaren Zahnersatzes vereinfacht und darüber hinaus sein Friktionsverhalten wesentlich verbessert.

Diese Aufgabe wird erfindungsgemäß durch ein Verfahren zur Herstellung eines herausnehmbaren gemäß den Merkmalen des unabhängigen Anspruchs 1 gelöst. Weitere vorteilhafte Ausgestaltungen sind den rückbezogenen Unteransprüchen zu entnehmen.

Bei dem erfindungsgemäßen Verfahren wird zum Herstellen des Sekundärteils ein dem Primärteil nachgeformtes Kunststofffriktionsteil auf das Primärteil abnehmbar aufgebracht. Das Kunststofffriktionsteil wird direkt auf dem Primärteil durch Tiefziehen einer Kunststofftiefziehfölie von dem Primärteil abgeformt, wobei das Sekundärteil innen dem Primärteil mit aufgesetztem Kunststofffriktionsteil unter Berücksichtigung eines Freiraumes für ein Klebemittel zur Befestigung des Kunststofffriktionsteils in dem Sekundärteil nachgebildet wird. Anschließend wird das Kunststofffriktionsteil in dem fertigen Sekundärteil mittels des Klebemittels fixiert.

Das Kunststofffriktionsteil wird vor dem Herstellen des Sekundärteils in der üblichen und bekannten Art und Weise auf das Primärteil aufgebracht. Dieses Kunststofffriktionsteil, das sowohl bei parallelen Flächen als auch bei Konusflächen in einem Bereich von 1 bis 2° verwendet werden kann, dient dazu, das Sekundärteil abnehmbar auf dem Primärteil zu halten. Das Kunststofffriktionsteil ermöglicht durch sein Material einerseits eine bessere Anpassung und andererseits eine gute abriebfreie und dauerhafte Friktion. Je nach Anwendungsfall kann es als Kappe oder Hülse ausgebildet sein. Vorteilhafterweise wird das Kunststofffriktionsteil durch Tiefziehen einer Kunststofftiefziehfolie hergestellt. Hierbei werden in bekannter Art und Weise mittels entsprechenden Tiefziehautomaten und Tiefziehfolien beispielsweise aus einem Copolyester, wie sie in der Dentaltechnik eingesetzt werden, das Kunststofffriktionsteil passgenau über das darunter befindliche Primärteil geformt.

Damit das Kunststofffriktionsteil sicher in dem Sekundärteil hält, muss es mit einem geeigneten Klebemittel in diesem fixiert werden. Um den dafür benötigten Freiraum bei der Herstellung des Sekundärteils beim üblichen Herstellen des Sekundärteils durch Modellguss zur Verfügung zu stellen, wird auf das Kunststofffriktionsteil eine Platzhalterschicht, beispielsweise aus Wachs oder einem anderen geeigneten Material, vorzugsweise mit einer Schichtdicke von 10-50 µm, auf gebracht. Das Duplieren für die nachfolgende Herstellung des Sekundärteils wird dann über die Platzhalterschicht durchgeführt. Nach dem Dupliervorgang wird die Platzhalterschicht entfernt.

Sofern die Herstellung des Sekundärteils computergesteuert erfolgt, wird vorteilhafterweise nach der Herstellung des Kunststofffriktionsteils eine digitale Datenerfassung für die nachfolgende computergesteuerte Herstellung eines Gerüsts für das Sekundärteil durchgeführt, wobei bei der computergesteuerten Herstellung auf dem Kunststofffriktionsteil eine Platzhalterschicht nach dem Einscannen für ein Klebemittel berücksichtigt wird.

Die verwendete Kunststofftiefziehfolie weist vorzugsweise eine Dicke von 0,5 bis 1 mm auf. Das fertiggestellte Kunststofffriktionsteil wird in dem fertigen Sekundärteil eingeklebt.

Durch die Erfindung wird eine an sich bekannte Kunststoffziehfolie für eine neue Anwendung eingesetzt. Es entsteht daraus ein Kunststofffriktionsteil, das sowohl bei neu hergestelltem abnehmbaren Zahnersatz als auch bei mit diesen neuen Techniken hergestellten bestehendem Zahnersatz eingesetzt werden kann. Insbesondere bei einem bestehenden Zahnersatz, bei dem kurzfristig wieder für Friktion gesorgt werden muss, stellt das Kunststofffriktionsteil eine schnelle und äußerst kostengünstige Lösung dar.

Der Vorteil gegenüber herkömmlichen Zahnersatz ist erheblich. Die Herstellung erfolgt mit geringeren Materialkosten (keine Einbettmasse), geringerem Energieaufwand und geringerer Zeit. Es ist eine einfache Wiederherstellung der Friktion möglich und auch bei bestehender Arbeit leicht einsetzbar. Es ist kein teurer Kleber erforderlich und es erfolgt kein Abrieb an dem Primärteil. Der Tragekomfort für den Patienten ist angenehm und das Kunststofffriktionsteil ist auf allen Materialien einsetzbar.

Nachfolgend wird die Erfindung anhand eines herausnehmbaren Zahnersatzes in Verbindung mit den begleitenden Zeichnungen erläutert. Es stellen dar:
- Figur 1: Ein Primärteil mit einem darüber befindlichen tiefgezogenen Kunststofffriktionsteils sowie einer darüber angeordneten Platzhalterschicht im Querschnitt, und
- Figur 2: eine Schnittdarstellung durch einen abnehmbaren Zahnersatz mit Primärteil und Sekundärteil.

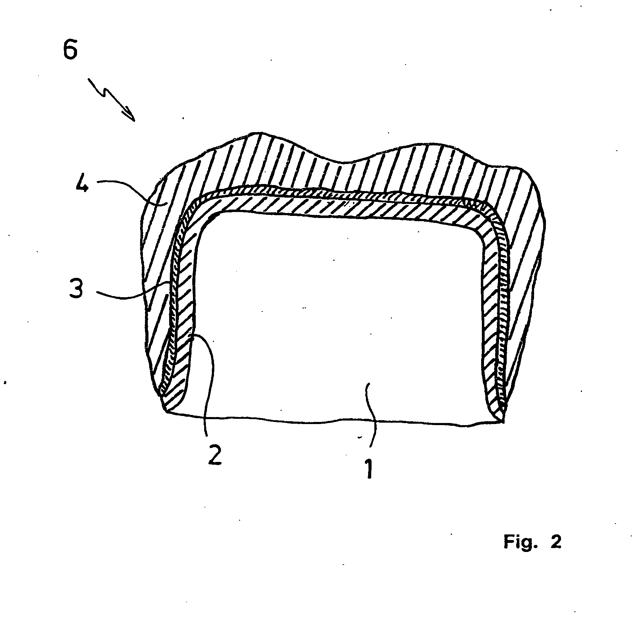

Figur 1 zeigt ein Primärteil 1, das auf einem nicht dargestellten Zahnstumpf angeordnet ist. Über dem Primärteil 1 befindet sich ein Kunststofffriktionsteil 2 in Form einer Kappe, das mittels eines üblichen in der Dentaltechnik verwendeten Tiefziehgeräts aus einer Kunststofftiefziehfolie hergestellt wurde. Für das Herstellen eines Sekundärteils 4 (siehe Figur 2) ist über dem Kunststofffriktionsteils 2 einer Platzhalterschicht 5 angeordnet, die aus Wachs oder einem anderen geeigneten Material hergestellt sein kann. Diese Platzhalterschicht 5 dient dazu, beim nachfolgenden Herstellen des Sekundärteils 4 mittels der Modelgusstechnik einen Freiraum zu schaffen, der bei dem fertigen Zahnersatz 6 (Figur 2) von einem Kleber 3 eingenommen wird.

Figur 2 zeigt einen Zahnersatz 6 gemäß der Erfindung mit dem Primärteil 1 mit darüber befindlichem Kunststofffriktionsteil 2. Das Kunststofffriktionsteil 2 ist mittels eines Klebers 3 an dem Sekundärteil 4, welches eine Kaufläche aufweist, befestigt. Beim Abnehmen des Sekundärteils 4 bleibt das Kunststofffriktionsteil 2 an dem Sekundärteil 4.

## Patentansprüche

1. Verfahren zum Herstellen von abnehmbarem Zahnersatz, bei dem auf einem Primärteil (1) ein abnehmbares Sekundärteil (4) mit Kau- oder Beißfläche modelliert wird, **dadurch gekennzeichnet, dass** vor dem Modellieren des Sekundärteils (4) auf dem Primärteil (1) ein dem Primärteil (1) nachgeformtes Kunststofffriktionsteil (2) auf das Primärteil (1) abnehmbar aufgebracht wird, wobei das Kunststofffriktionsteil (2) durch Tiefziehen- einer Kunststofftiefziehfolie hergestellt wird und dass nach dem Modellieren des Sekundärteils (4) das Kunststofffriktionsteil (2) in dem fertigen Sekundärteil (4) mittels eines Klebers (3) fixiert wird.

2. Verfahren nach Anspruch 1, **dadurch gekennzeichnet, dass** das Kunststofffriktionsteil (2) aus einer Kunststofftiefziehfolie mit einer Dicke von 0,5 bis 1 mm, hergestellt wird.

3. Verfahren nach Anspruch 1 oder 2, **dadurch gekennzeichnet, dass** auf das Kunststofffriktionsteil (2) außen eine Platzhalterschicht (5) aufgebracht wird.

4. Verfahren nach Anspruch 3, **dadurch gekennzeichnet, dass** das Duplieren für die nachfolgende Herstellung des Sekundärteils (4) über die Platzhalterschicht (5) durchgeführt wird.

5. Verfahren nach Anspruch 4, **dadurch gekennzeichnet, dass** die Platzhalterschicht (5) nach dem Dupliervorgang entfernt wird.

6. Verfahren nach Anspruch 1 oder 2, **dadurch gekennzeichnet, dass** nach der Herstellung und dem Aufbringen des Kunststofffriktionsteils (2) auf das Primärteil (1) eine digitale Datenerfassung für die nachfolgende computergesteuerte Herstellung eines Gerüsts für das Sekundärteil (4) durchgeführt wird, wobei bei der computergesteuerten Herstellung auf dem Kunststofffriktionsteil (2) eine Platzhalterschicht für das Klebemittel (3) berücksichtigt wird.

## Claims

1. Method to produce a removable denture, in which a removable secondary part (4) is modelled with occlusal or bite surfaces on a primary part (1), **characterised in, that** before the modelling of the secondary part (4) on the primary part (1), a plastic friction part (2), being shaped equal to the primary part (1), is applied removably onto the primary part (1), wherein the plastic friction part (2) is produced by deep-drawing of a plastic deep-drawing foil, and that after the modelling of the secondary part (4), the plastic friction part (2) is fixed in the finished secondary part (4) by means of an adhesive (3).

2. Method according to claim 1, **characterised in, that** the plastic friction part (2) is made of a plastic deep-drawing foil with a thickness of 0.5 to 1 mm.

3. Method according to claim 1 or 2, **characterised in, that** a place-holder layer (5) is applied outwardly to the plastic friction part (2).

4. Method according to claim 3, **characterised in, that** the doubling for the subsequent production of the secondary part (4) is carried out on the place-holder layer (5).

5. Method according to claim 4, **characterised in, that** the place-holder layer (5) is removed after the doubling process.

6. Method according to claim 1 or 2, **characterised in, that** after the production and the application of the plastic friction part (2) onto the the primary part (1), a digital data capturing for the subsequent computer-generated production of a framework for the secondary part (4) is carried out, wherein a place-holder layer for the adhesive (3) is taken into account during the computer-controlled production on the plastic friction part (2).

## Revendications

1. Procédé de fabrication d'une prothèse dentaire amovible, selon lequel une partie secondaire amovible (4) pourvue d'une surface à mastiquer ou à mordre est modelée sur une partie primaire (1), **caractérisé en ce que**, avant le modelage de la partie secondaire (4) sur la partie primaire (1), une partie de friction (2) en matière plastique reproduisant la partie primaire (1) est mise en place de manière amovible sur la partie primaire (1), sachant que la partie de friction en matière plastique est fabriquée par thermoformage d'une feuille de thermoformage en matière plastique, et **en ce que**, après le modelage de la partie secondaire (4), la partie de friction (2) en matière plastique est fixée en position dans la partie secondaire achevée (4) au moyen d'un produit adhésif (3).

2. Procédé selon la revendication 1, **caractérisé en ce que** la partie de friction (2) en matière plastique est fabriquée à partir d'une feuille de thermoformage en matière plastique d'une épaisseur de 0,5 à 1 mm.

3. Procédé selon la revendication 1 ou 2, **caractérisé en ce qu'**une couche de réservation d'emplacement (5) est mise en place extérieurement sur la partie de friction (2) en matière plastique.

4. Procédé selon la revendication 3, **caractérisé en ce que** la duplication pour la fabrication consécutive de la partie secondaire (4) est effectuée au moyen de la couche de réservation d'emplacement (5).

5. Procédé selon la revendication 4, **caractérisé en ce que** la couche de réservation d'emplacement (5) est enlevée à la suite de l'opération de duplication.

6. Procédé selon la revendication 1 ou 2, **caractérisé en ce que**, à la suite de la fabrication et de la mise en place de la partie de friction (2) en matière plastique sur la partie primaire (1), on effectue un enregistrement numérique de données pour la fabrication commandée par ordinateur d'un cadre pour la partie secondaire (4), sachant que lors de la fabrication commandée par ordinateur, on tient compte sur la partie de friction (2) en matière plastique d'une couche de réservation d'emplacement pour le produit adhésif (3).
